# EUROPEAN PATENT APPLICATION

(11) **EP 4 660 939 A1**
(43) Date of publication of application: **10.12.2025**
(21) Application number: 24749783.7
(22) Date of filing: 19.01.2024
(51) Int. Cl.: G06T 7/00, G06V 10/22, B25J 19/04, H04N 23/60

(54) **METHOD AND DEVICE FOR CONTROLLING MOBILE ROBOTS WITHOUT A COMPUTER OR MOUNTED SENSORS**

(30) Priority: 03.02.2023 ES 202330080
(71) Applicant: Ostirion, SLU, 28001 Madrid (ES)
(72) Inventor: BARRIO CRESPO, Hector, 39011 Santander Cantabria (ES)
(86) International application number: PCT/ES2024/070033
(87) International publication number: WO 2024/161056

(57) **Abstract**

METHOD AND APPARATUS FOR CONTROLLING MOBILE ROBOTS WITHOUT ONBOARD COMPUTERS OR SENSORS, comprising: one or more video cameras (C), preferably high-resolution and high-frame-rate, for capturing images of a spatial volume (S) located indoors or outdoors; processing units (3a, 3b, 3c), connected to the cameras (C), based on artificial intelligence technologies and deep neural networks for performing the individual localization and control of one or more mobile robots (R) without onboard computers or sensors, preferably including: an optical mobile robot detector (3a), a generator of individual identity and localization information (3b) for mobile robots (R) and obstacles (O), and a command processing unit (3c) necessary to control one or more mobile robots (R); a communication module (i) for sending digital messages containing the necessary commands (X) to control mobile robots (R).

## Description

### OBJECT OF THE INVENTION

The invention, as indicated in the heading of this descriptive specification, relates to a method and a related apparatus for controlling the motion trajectory of mobile robots without requiring said robots to have embedded onboard sensing or computing components. The invention provides, for its intended purpose, advantages and features-which are described in detail below-that represent an improvement over the current state of the art.

More specifically, the subject matter of the invention focuses on a method, and the corresponding apparatus for carrying out said method, designed as an additional or alternative system to currently existing mobile robot control technical solutions. Its purpose is to enable the control of the position and movement of one or more mobile robots not equipped with onboard sensors and computers onboard, whether operating indoors or outdoors. This is achieved through optical recognition technology using artificial intelligence techniques, and among other advantages, constitutes a system that allows automated control of a fleet of mobile robots at a reduced cost compared to existing technologies.

### FIELD OF APPLICATION OF THE INVENTION

The present invention is applicable in the industry dedicated to the development and implementation of mobile robotic systems and automated mobile robotic solutions, both for logistics and service-oriented purposes, with particular interest in solutions that are cost-effective, scalable, and easy to maintain. It is especially relevant to scenarios where the presence of onboard computers and sensors on the robots is not viable due to cost, energy consumption, or reliability constraints.

### BACKGROUND OF THE INVENTION

Controlling a fleet of mobile robots, particularly in high-traffic environments and confined spaces, is critical to executing certain logistics processes involving the transport of goods and people.

The management of such fleets presents a complex problem wherein each individual robot unit must be equipped with sensors and computers to gather information regarding its own position and surroundings, and to make decisions on which direction or path to follow in order to reach its destination without colliding with other mobile robots operating in the same area or with obstacles within that space. In specific industrial activities and sectors-such as parcel transport and distribution logistics-the control of mobile robot fleets is essential to the successful performance of operations. This control becomes even more complex due to the high density of mobile robots required, the significant cost associated with equipping each individual unit with sensors and computing systems, and the critical need for high operational availability of these mobile robots.

The loss of localization data or control over a specific mobile robot unit, as part of a broader fleet, causes inefficiencies in industrial operations regardless of their nature. Moreover, the presence of numerous sensors and computing systems onboard each mobile robot unit reduces overall system reliability, rendering it more vulnerable to operational failures, which may lead to traffic congestion in confined zones and hinder the maneuverability of other mobile robots. As an illustrative example, a failure in a proximity sensor onboard a mobile robot operating within a parcel distribution logistics facility could block the path of additional robots, leading to a substantial decrease in operational efficiency.

There are multiple known methods for controlling mobile robots within a delimited area that are generally based on trajectory control procedures executed by the onboard computer of the autonomous mobile robot using information from various onboard sensors. These may include global positioning systems (GPS), ultrasonic acoustic sensors, infrared optical sensors, electromagnetic sensors such as RADAR or LIDAR, and similar technologies.

Such localization and control systems are expensive and pose operational challenges in environments with a high mobile robot density. Additionally, the combination of multiple sensors and computers onboard fleet units increases their vulnerability to failure, with potential consequences such as full fleet motion congestion.

At the same time, it is desirable for organizations whose operations rely on mobile robots to have access to localization and control techniques that allow for precise and immediate tracking of individual robots and their trajectories, while enabling automated, low-latency, and cost-effective control.

Consequently, organizations dependent on critical mobile robot operations would benefit greatly from a system that enables cost-effective and more reliable localization and control of mobile robots.

The objective of the present invention is therefore to develop such a system based on the use of artificial intelligence models and optical cameras. These optical cameras may either be part of existing video surveillance or similar systems that capture imagery of the operational space of the mobile robots, or they may be specifically installed as fixed or mobile optical camera systems for the purpose of this invention.

Furthermore, with respect to the current state of the art, it should be noted that, at least to the knowledge of the applicant, no procedure or control system for mobile robots lacking onboard computers or sensors exists that offers technical or structural characteristics equal or similar to those claimed herein.

In this regard, it is worth noting the existence of documents describing procedures and systems that are related or partially comparable to the object of the present invention and applicable in various industrial sectors and activities. Among the closest examples, the following can be mentioned:
- Patent CN109709966B, which refers to a mobile robot control system capable of regulating movement through onboard sensors.
- Patent US10974395B2, which discloses a mobile robot control system based on the generation of a map of the operational environment by a mobile robot specifically designated for that purpose.

### DESCRIPTION OF THE INVENTION

The method and apparatus for controlling mobile robots without onboard computers or sensors, as proposed by the invention, represents an optimal solution to the objective previously described. The defining technical features that enable this and distinguish the invention are duly set forth in the final claims accompanying this description.

As outlined above, the invention proposes a method and the associated apparatus to carry it out, conceived as an alternative or complementary system to those currently used for controlling mobile robots within a defined area. Its objective is to perform the localization and control of such mobile robots remotely and automatically, identifying the position of a given robot individually within a computerized model of a spatial volume, which may be located either indoors or outdoors, and to generate the commands necessary for the robot to follow a trajectory toward a specific tareget destination.

The proposed invention is based on optical recognition using artificial intelligence models and optical cameras. Among its advantages, it offers automated operation, is more cost-effective than existing mobile robot control systems, and does not require the robots to actively emit any radiation during the process of obtaining environmental information.

Accordingly, in the method and apparatus forming the object of this invention, optical visual detection means are used, operated through computerized artificial intelligence processors, either replacing or supplementing existing mobile robot control methods. This creates an additional and independent system that reduces the cost of installation and operation of mobile robot control systems, improves the accuracy of localization and control, and decreases the number of sensors and computers required per individual robot or fleet.

Moreover, reducing the number of sensors and computers installed in a fleet of mobile robots also results in lower total system cost and decreased energy consumption, since the robots no longer carry onboard computers for trajectory control. The reduction in the number of sensors is also beneficial from an environmental and sustainability standpoint, as it decreases the waste generated when removing the multiple sensors currently used in mobile robots.

More specifically, the apparatus for carrying out the proposed method consists of a system comprising one or more video cameras-either fixed or mounted on mobile robots-preferably high-resolution and with a high frame rate, connected to several artificial intelligence computing processors. Specifically, at least three: a processor for detecting and identifying mobile robots; a processor for localizing these detections and identities within a spatial volume; and a processor that computes the necessary movement commands to control the mobile robots, calculates the motion operations to be performed by each robot, and sends signals to them via a wireless communication system.

The mobile robots are equipped with wireless signal receivers that allow them to receive the control signal generated by the command processor and execute the received movement instructions. These three processors rely on artificial intelligence technologies and deep neural networks to carry out their respective functions.

Additionally, the information generated by the control processor may be stored in electronic media such as hard drives or displayed on screens in real time.

The mobile robot control apparatus is also economically advantageous and can be easily integrated with existing mobile robot fleet management systems and procedures.

Compared to current systems and procedures for mobile robot localization and control, it offers the following benefits:
- Cost-effectiveness: The system proposed in this invention relies heavily on computation and on affordable systems, avoiding the need for multiple sensors and onboard computers. The markers optionally used by the system are passive and significantly less expensive than the position sensors and control computers they replace.
- Reduced electromagnetic and ultrasonic emissions: The system allows for reduced emission of electromagnetic radiation and ultrasonic signals by replacing the active sensors installed on mobile robots with passive optical control systems.
- Increased reliability and accuracy in detection and control: The system enables more consistent localization and control of mobile robots, with broader coverage of the spatial volume in which such localization and control operations are performed.

### DESCRIPTION OF THE DRAWINGS

To complete the description being provided and in order to facilitate a better understanding of the characteristics of the invention, this descriptive specification is accompanied, as an integral part thereof, by a set of drawings which, in an illustrative and non-limiting manner, depict the following:

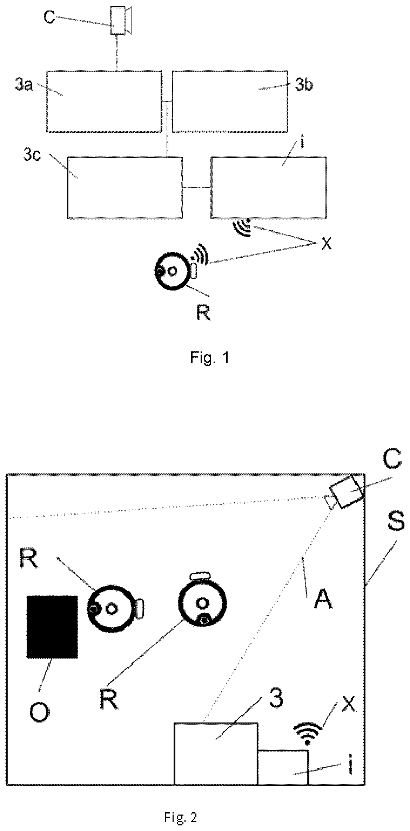

**Figure 1** **shows,** in a block diagram, a representation of the set of elements comprising the apparatus for carrying out the method of localization and control of mobile robots, according to the invention.
**Figure 2** **shows** a schematic representation of a group of mobile robots being localized and controlled within a volume, shown in plan view, as contemplated by the invention.

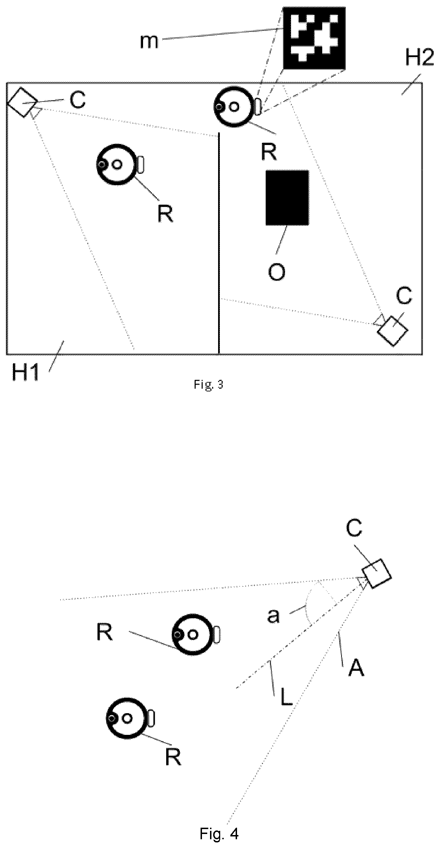

**Figure 3** **shows** a schematic representation of a group of mobile robots being localized and controlled within subdivisions of a volume, shown in plan view.
**And** **Figure 4** **shows** a schematic representation of the geometric information required to perform the localization and control of mobile robots and autonomous vehicles, shown in plan view.

### PREFERRED EMBODIMENT OF THE INVENTION

In view of the aforementioned figures, and in accordance with the adopted numbering, an example of a non-limiting embodiment of the apparatus for carrying out the method of localization and control of mobile robots without control computers or onboard sensors, according to the invention, can be observed, comprising what is indicated and described in detail below.

Thus, on the one hand, the method for localization and control of one or more mobile robots (R) object of the invention comprises at least the following stages:
- Capturing the image of a spatial volume (S) and detecting the mobile robots (R) through one or more video cameras, fixed or installed on mobile robots (C), which capture images of the space (S) within a field of view (A).
- Sending the images captured by the cameras (C) to the group of processors (3), preferably via wireless communication.
- Processing the information from the optical signal captured by the cameras (C), preferably high-resolution and high-frame-rate, using processors (3a, 3b), based on computerized artificial intelligence models and deep neural networks, capable of detecting and localizing in the images obtained via the optical signal the mobile robots (3a), generating information on the individual identity and localization of the detected mobile robots within the camera's field of view (3b), and a command processing unit (3c) capable of calculating and generating the commands required to control the movement of the mobile robots, avoiding other mobile robots and obstacles (O).
- Sending the necessary commands (X) to control the trajectory of the mobile robots (R) through a wireless communication module (i), and their reception and execution by the mobile robots (R).

The cameras (C) may also be equipped for image capture in the absence of light using light intensifiers or for capturing infrared radiation.

The system may also perform localization of individually identified mobile robots within a separate room or subdivision (H1, H2) of the volume (V), and determine their exact position.

The mobile robots (R) to be detected may also be equipped with fiducial markers (m) that facilitate their detection and identification by the processors (3a, 3b).

The method also includes a further step of sending the control operation information, computed by the command processing unit (3c), to the mobile robots via wireless communication.

On the other hand, the apparatus for carrying out the aforementioned method, as shown in the figures, essentially comprises:
- One or more video cameras (C), preferably high-resolution and high-frame-rate, installed in known locations, preferably mounted on fixed supports or mobile elements such as robotic vehicles or drones, so as to capture the image of a spatial volume (S).
- A hardware unit (3), preferably installed near the cameras (C), equipped with processors (3a, 3b) based on computerized artificial intelligence models and deep neural networks capable of performing the localization and identification of one or more mobile robots (R), processing the optical signal captured by the cameras (C), preferably comprising at least:
   - A mobile robot detector (3a) capable of detecting the presence of one or more specific mobile robots (R) within the field of view (A) of one or more cameras (C).
   - A localizer (3b) capable of determining the distance (L) and angular deviation (a) with respect to the field of view (A) of one or more mobile robots (R), and of individually identifying a specific mobile robot within the group of detected mobile robots.
   - A command processor unit (3c) capable of producing the commands (X) necessary to control the movement of the mobile robots.
- At least one communication module (i) for transmitting the control commands (X) from the command processor unit (3c) to one or more mobile robots (R) and to other external systems.

The nature of the present invention having been sufficiently described, as well as the manner of putting it into practice, it is not deemed necessary to extend the explanation further for any expert in the field to understand its scope and the advantages that derive from it. It is stated that, within its essential nature, the invention may be carried out in other embodiments that differ in detail from the example provided, and such embodiments shall also be covered by the protection sought, provided that its fundamental principle is not altered, changed, or modified.

## Claims

1. METHOD FOR CONTROLLING MOBILE ROBOTS WITHOUT ONBOARD COMPUTERS OR SENSORS which, applicable as an additional or substitute system to existing mobile robot control systems, is **characterized by** comprising at least the following steps:
- capturing an image of a spatial volume (S), located either indoors or outdoors, using one or more video cameras (C) installed in known locations, preferably mounted on fixed supports or mobile elements such as mobile robots or drones;
- processing the information from the optical signal captured by the camera or cameras (C) using processing units (3a, 3b), based on computerized artificial intelligence models and deep neural networks, capable of performing individual localization of one or more mobile robots (R) without onboard sensors or computers, optionally marked with fiducial identification tags (m), and capable of detecting obstacles (O);
- processing the information from the optical signal captured by the camera or cameras (C) using (3a, 3b), based on computerized artificial intelligence models and deep neural networks, capable of localizing obstacles (O) in the trajectory or vicinity of the mobile robots (R);
- processing the information generated by the processing units (3a, 3b) to compute the necessary commands for controlling one or more mobile robots (R) using a command processsing unit (3c), avoiding other mobile robots and obstacles (O);
- sending digital messages containing the necessary commands (X) to control the trajectory of one or more mobile robots (R) via the communication system (i) for reception and execution by the mobile robots (R) through wireless communication.

2. METHOD FOR CONTROLLING MOBILE ROBOTS WITHOUT ONBOARD COMPUTERS OR SENSORS **according to claim 1, characterized in that** it comprises the ability to control mobile robots lacking sensors and/or lacking onboard control computers and/or lacking communication message transmission systems.

3. METHOD FOR CONTROLLING MOBILE ROBOTS WITHOUT ONBOARD COMPUTERS OR SENSORS **according to claim 1, characterized in that** the optical signal captured by the camera or cameras (C) is processed using a mobile robot detector (3a), a generator of identity and location information (3b) for mobile robots (R) and obstacles (O) in the trajectory or vicinity of said mobile robots within the spatial volume, and a command processing unit (3c) necessary to control one or more mobile robots (R).

4. APPARATUS FOR CONTROLLING MOBILE ROBOTS WITHOUT ONBOARD COMPUTERS OR SENSORS applicable as an additional or substitute system to existing mobile robot control systems, **characterized by comprising:**
- one or more video cameras (C), preferably high-resolution and high-frame-rate, installed in known locations, preferably mounted on fixed supports or mobile elements such as mobile robots or drones, capable of sending digital images to hardware unit (3) via preferably wireless communication networks;
- hardware unit (3) equipped with processing units (3a, 3b, 3c), based on artificial intelligence technologies and deep neural networks, capable of receiving the images sent by the cameras (C) and capable of performing individual identification, localization, and calculation of the commands necessary to control one or more mobile robots (R) within a spatial volume (S) based on the images sent by the cameras (C), avoiding other mobile robots and obstacles (O);
- a communication module (i), for sending control commands from the hardware unit with computerized processors (3) to the mobile robots (R) and to other external devices for display on screens and/or storage in computerized media.

5. APPARATUS FOR CONTROLLING MOBILE ROBOTS WITHOUT ONBOARD COMPUTERS OR SENSORS **according to claim 4, characterized in that** it comprises at least the following processors:
- a processing unit (3a) for detecting mobile robots (R) and obstacles (O) by optical means;
- a processing unit (3b) for localizing and identifying individual mobile robots (R);
- a command processing unit (3c) for controlling the trajectory of mobile robots (R).

6. APPARATUS FOR CONTROLLING MOBILE ROBOTS WITHOUT ONBOARD COMPUTERS OR SENSORS **according to claim 4 or 5, characterized by comprising** a communication module (i) for sending digital messages containing the necessary commands (X) to control mobile robots (R) from the processor hardware unit (3) to the mobile robots (R) and to other external devices for display on screens and/or storage in computerized media.
